# EUROPEAN PATENT APPLICATION

(11) **EP 1 143 186 A1**
(43) Date of publication of application: **10.10.2001**
(21) Application number: 01830228.1
(22) Date of filing: 02.04.2001
(51) Int. Cl.: F16L 37/092

(54) **Pipe fitting**

(30) Priority: 05.04.2000 IT RM000068 U
(71) Applicant: Sabras S.r.l., 25011 Ponte San Marco di Calcinato (BS) (IT)
(72) Inventor: Savardi, Lino, 25011 Ponte San Marco di Calcinato (BS) (IT)
(74) Representative: Iannone, Carlo Luigi

(57) **Abstract**

The present invention relates to a pipe fitting comprising a centrally holed body (1), that can be deformed by an outer tightening action, having a first and a second open ends, a split tightenable element (2), housed within said body (1), in correspondence of said first end, or introduction end for the tube (8) to be pipe jointed within the pipe fitting body (1), said tightenable element being provided with grasping (3) teeth for the coupling with the outer surface of the tube to be pipe jointed, at least two sealing means (4), provided within said body, internally with respect to said tightening element, and separated each other by a spacing element (5).

## Description

The present invention relates to a pipe fitting, particularly a pipe fitting for tubes.

As it is well known, many pipe fittings presently exist in the art, particularly pipe fittings for tubes, to be employed in different technical fields, all said solutions having some advantages and some drawbacks, according to the specific use.

Mainly, different pipe fittings are available on the market, substantially inspired to the specific tube for which they are realised.

Particularly, the same Applicant has realised a pipe fitting, which is the subject of the Italian Utility Model Application N° RM98U000112, filed on April 20, 1998, comprising a centrally holed body, that can be deformed by an outer tightening action, having a first and a second open end, a tightenable element, housed within said body, in correspondence of said first end, or end for the insertion of the tube to be joined within the body of said pipe fitting, said tightenable element being provided with grasping teeth for the coupling with the outer surface of the tube to be joined, and sealing means, provided within said body, internally with respect to said tightening element.

Main object of the present invention is that of providing a further improvement of the pipe fitting described in the previous patent application.

It is therefore specific object of the present invention a pipe fitting comprising a centrally holed body, that can be deformed by an outer tightening action, having a first and a second open ends, a split tightenable element, housed within said body, in correspondence of said first end, or introduction end for the tube to be pipe jointed within the pipe fitting body, said tightenable element being provided with gripping teeth for the coupling with the outer surface of the tube to be pipe jointed, at least two sealing means, provided within said body, internally with respect to said tightening element, and separated each other by a spacing element.

Preferably, according to the invention, said spacing element can be comprised of a spacing ring or of a third sealing means.

Particularly, according to the invention, said body of the pipe fitting is comprised of metallic material.

Still according to the invention, said body is internally provided with a shoulder for the tube to be pipe jointed.

Furthermore, according to the invention, said sealing means are comprised of O-rings.

Always according to the invention, at the end of the tube to joint to be introduced within the pipe fitting a support sleeve is provided, said sleeve being preferably comprised of metallic material.

Still according to the invention, the outer deformation of the pipe fitting body causes a permanent bending of the first end of said body.

The present invention will be now described, for illustrative but not limitative purposes, according to its preferred embodiments, with particular reference to the figures of the enclosed drawings, wherein:

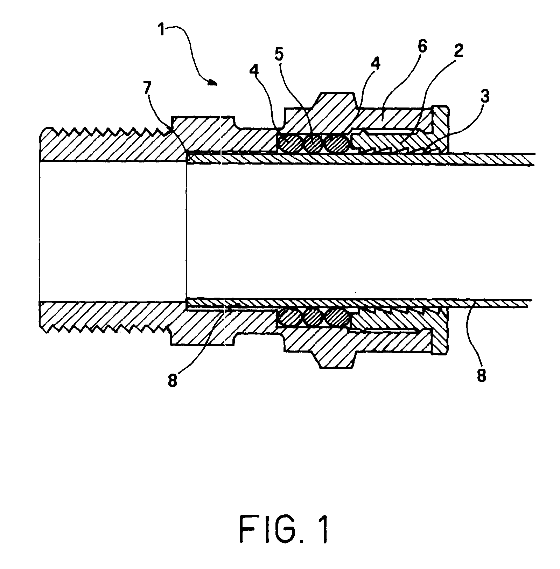

figure 1 is a section view of a pipe fitting according to the invention;

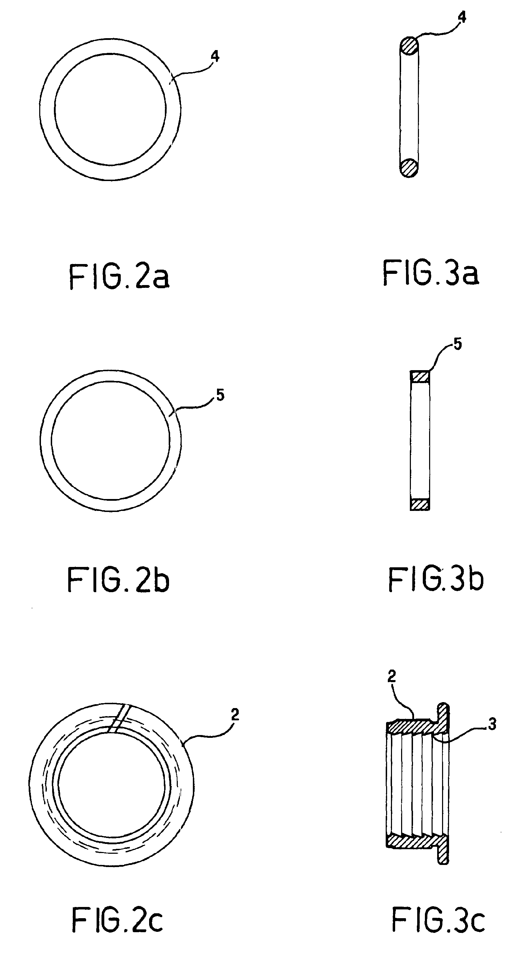

figures 2a, 2b and 2c are front views of parts of the pipe fitting according to the invention;
figures 3a, 3b and 3c are section view of parts of figures 2a, 2b and 2c;

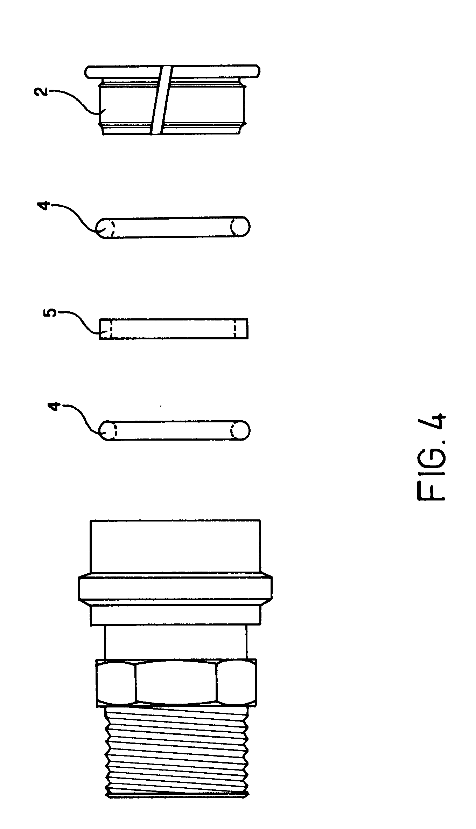

figure 4 is an exploded view of the pipe fitting of figure 1; and
figure 5 is a section view of a different embodiment of the pipe fitting according to the invention.

Referring now to the figures of the enclosed drawings, it can be noted a pipe fitting 1 according to the invention, providing a split jaw 2, inertly provided with teeth 3, two O-rings 4, between which a spacing ring 5 is provided.

Said spacing ring 5 is preferably comprised of polymeric material. It ensures the positioning each other of O-rings 4 within the pipe fitting according to the invention.

By the reference number 6, it is indicated the part of the body 1 on which the pressure action can be exerted.

Finally, by the reference number 7 it is indicated the tube 8 shoulder on which the pipe fitting must be carried out.

Split jaw 2 can be inserted within the body of the pipe fitting by threading or by pressure, thus creating a suitable coupling between the jaw 2 and the same pipe fitting.

Between the two O-rings 4 the plastic or metallic spacing ring 5 is introduced, maintaining separated the to O-rings 4, in such a way to increase the part of the tube on which the sealing must be made.

It is a very important solution since the tube 8 could be dent or have other scratches, caused by the installer with the building yard.

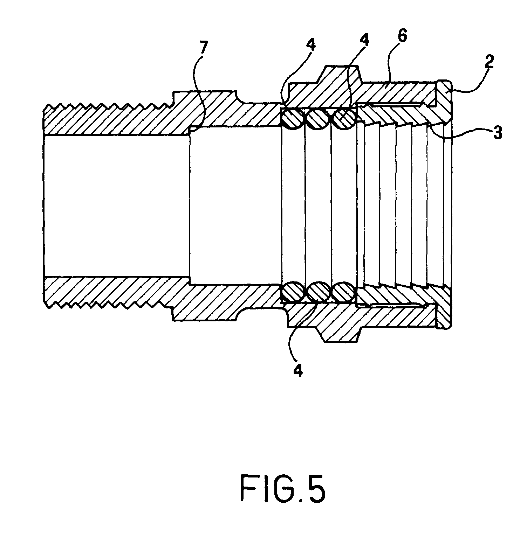

As it can be seen from figure 5, instead of the spacer 5, a third O-ring 4 can be provided, thus obtaining the same advantages obtained by the previous solution. The central O-ring is completely insulated with respect to the contact with liquids, dusts or air from outward, so that a longer duration of the pipe fitting with respect to that presently available on the market, on the basis of the fact that when the outer O-ring 4 finished its useful life, e.g. due to the crystallisation, central O-ring 4 will be in perfect conditions to carry out its action.

Pipe fitting according to the invention can be advantageously employed for any kind of tube, particularly copper tubes, plastic tubes and "multilayer composite material tubes" (the latter being comprised of different polymers combined with aluminium).

As already said, for plastic material tubes, the pipe fitting according to the invention requires the insertion of a support sleeve, comprised of metallic material, within the end to be pipe jointed, before its compression, in such a way to avoid the squeezing of the tube wall and a correct grasping of the metallic jaw.

Further, for multilayer tubes, said sleeve will have to be shaped in such a way to include a further plastic material seal, preventing the contact between different materials (steel and aluminium), and the contact between water and aluminium.

The solution described in the above does not require any particular skill by the user, and requires the use of a fixing instrument easily available on the market.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Pipe fitting **characterised in that** it comprises a centrally holed body, that can be deformed by an outer tightening action, having a first and a second open ends, a split tightenable element, housed within said body, in correspondence of said first end, or introduction end for the tube to be pipe jointed within the pipe fitting body, said tightenable element being provided with gripping teeth for the coupling with the outer surface of the tube to be pipe jointed, at least two sealing means, provided within said body, internally with respect to said tightening element, and separated each other by a spacing element.

2. Pipe fitting according to claim 1, **characterised in that** said spacing element is comprised of a spacing ring.

3. Pipe fitting according to claim 1, **characterised in that** said spacing element is comprised of a third sealing means.

4. Pipe fitting according to one of the preceding claims, **characterised in that** said body of the pipe fitting is comprised of metallic material.

5. Pipe fitting according to one of the preceding claims, **characterised in that** said body is internally provided with a shoulder for the tube to be pipe jointed.

6. Pipe fitting according to one of the preceding claims, **characterised in that** said sealing means are comprised of O-rings.

7. Pipe fitting according to one of the preceding claims, **characterised in that** at the end of the tube to be pipe jointed to be introduced within the pipe fitting a support sleeve is provided, said sleeve being preferably comprised of metallic material.

8. Pipe fitting according to one of the preceding claims, **characterised in that** the outer deformation of the pipe fitting body causes a permanent bending of the first end of said body.

9. Pipe fitting according to anyone of the preceding claims, substantially as illustrated and described.
